# EUROPEAN PATENT APPLICATION

(11) **EP 2 752 232 A1**
(43) Date of publication of application: **09.07.2014**
(21) Application number: 12828078.1
(22) Date of filing: 31.08.2012
(51) Int. Cl.: B01D 53/04

(54) **GAS-ADSORBING SEPARATION EQUIPMENT**

(30) Priority: 31.08.2011 JP 2011188475
(71) Applicant: JFE Steel Corporation, Tokyo 100-0011 (JP); Sumitomo Seika Chemicals Co., Ltd., Kako-gun, Hyogo 675-0145 (JP)
(72) Inventor: SAIMA, Hitoshi, Tokyo 100-0011 (JP); MOGI, Yasuhiro, Tokyo 100-0011 (JP); HARAOKA, Takashi, Tokyo 100-0011 (JP); MIYAKE, Masanori, Kako-gun Hyogo 675-0145 (JP); TAKATA, Yoshinori, Kako-gun Hyogo 675-0145 (JP)
(74) Representative: HOFFMANN EITLE
(86) International application number: PCT/JP2012/072175
(87) International publication number: WO 2013/031955

(57) **Abstract**

A gas adsorption separation apparatus includes a plurality of adsorption vessels through which a gas mixture is passed to be brought into contact with an adsorbent to adsorb at least one gas component in the gas mixture, the plurality of adsorption vessels performing, by turns, an adsorption step and a desorption step, or an adsorption step, a rinsing step and a desorption step, wherein each adsorption vessel has a vertical cylindrical shape, the interior of each adsorption vessel is divided into five regions in parallel in a horizontal direction, and of these regions, a central region constitutes a gas inflow region A, regions adjacent to the gas inflow region A on opposite sides thereof constitute gas adsorption regions B₁ and B₂, and outermost regions adjacent to the respective gas adsorption regions B₁ and B₂ constitute off-gas outflow regions C₁ and C₂.

## Description

### Field

The present invention relates to a gas adsorption separation apparatus for adsorbing and separating a specific gas component from a gas mixture by pressure swing adsorption or the like.

### Background

As a method for separating mixed gases, pressure swing adsorption (PSA) method has been used for a long time. In this method, a gas mixture is brought into contact with an adsorbent with high adsorbability to at least one gas component in the gas mixture to cause the gas component to be adsorbed by the adsorbent while the other gas component is concentrated, and then the adsorbed gas component is desorbed from the adsorbent by reducing the pressure in the vessel for separation.

Pressure swing adsorption is used in various fields as a method for separating mixed gases. Pressure swing adsorption is often used as a method for producing a high-purity gas typically by separating a specific gas component from a gas mixture. High-purity gases adsorbed and separated (produced) from gas mixtures by pressure swing adsorption include hydrogen, oxygen, carbon dioxide, and carbon monoxide or the like, for example.

A method using pressure swing adsorption in which, with air as a raw material, nitrogen is adsorbed by an adsorbent to produce high-purity oxygen has been performed. In this case, as an adsorbent, X-type zeolites ion-exchanged with calcium had previously been used. In recent years, X-type zeolites ion-exchanged with lithium that has high adsorbability to nitrogen have come to be used. When hydrogen is produced from gas mixtures containing about 50 to 80 vol% of hydrogen such as cracked gases or reformed gases of hydrocarbons, alcohols, or ethers in the petrochemical industry, or coke oven gases in the iron industry, for example, pressure swing adsorption using A-type zeolites as adsorbents has been adopted.

In the production of oxygen or hydrogen by pressure swing adsorption like these, an unnecessary gas component is adsorbed by an adsorbent to produce a necessary gas component of high concentration with high purity.

On the other hand, with boiler exhaust gases or combustion exhaust gases as raw materials, carbon dioxide for chemical raw materials and dry ice is produced by pressure swing adsorption. In the production of this, activated carbon adsorbents and Y-type zeolite adsorbents are used. Also, with converter gases in the iron industry as raw materials, carbon monoxide for chemical raw materials is produced by pressure swing adsorption. In the production of this, zeolite adsorbents and copper (I)/alumina adsorbents are used.

In the production of carbon dioxide and carbon monoxide by pressure swing adsorption like these, a necessary gas component is adsorbed by an adsorbent and desorbed, thereby producing a necessary gas component with high purity.

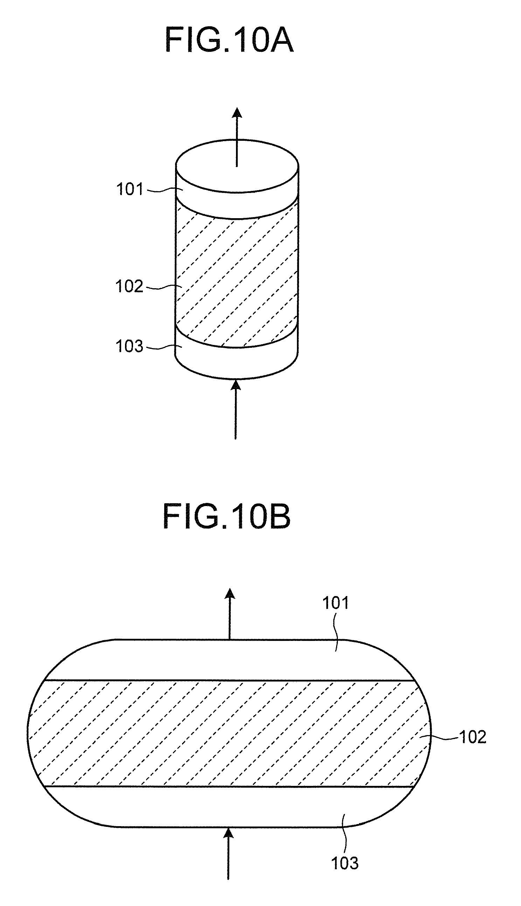

As described above, in accordance with the types of gases and the characteristics of adsorbents, various gas separation systems by pressure swing adsorption have been developed and operated. However, there is not much difference in structure between pressure swing adsorption apparatuses of gas adsorption separation apparatuses, which are the most important portions in the systems. Specifically, a structure in which an adsorption tower is filled with an adsorbent in its central portion illustrated in FIGS. 10A and 10B described below is common.

Meanwhile, there are two ways in gas separation operation in pressure swing adsorption apparatuses, a way of collecting an adsorbed gas, and a way of collecting a non-adsorbed gas. For example, the way of collecting an adsorbed gas commonly includes the following three steps (1) to (3).
(1) An adsorption step in which a gas is introduced into an adsorption tower, and the gas is adsorbed by an adsorbent.
(2) A rinsing step in which a high-purity gas is introduced into an adsorption tower to expel an unnecessary gas.
(3) A desorption step in which the pressure in an adsorption tower is made lower than that in the rinsing step to collect the adsorbed gas.

For example, when carbon dioxide is collected from a gas mixture, the adsorption step is performed at a pressure of about 50 to 100 kPa, then high-purity carbon dioxide is introduced at atmospheric pressures to expel an unnecessary gas, and finally the pressure is reduced to a vacuum, thereby being able to obtain high-purity carbon dioxide. High-purity carbon dioxide necessary for the rinsing step is supplied from an adsorption tower performing the desorption step.

Conventional gas adsorption separation apparatuses are broadly divided in structure into a cylindrical shape and a pillow-like shape. Of them, as illustrated in FIG. 10A, a gas adsorption separation apparatus with a cylindrically-shaped tower structure has a structure in which a raw material gas made of a gas mixture is introduced from below, and a gas component is adsorbed by an adsorbent filling a gas adsorption portion. As this is increased in size, the gas adsorption portion is increased in the layer height, increasing a pressure loss when passing a gas therethrough. Therefore, as illustrated in FIG. 10B, in a low-pressure large apparatus in which a pressure loss becomes a problem, a pillow-like shape is adopted.

A gas adsorption separation apparatus in the pillow-like shape can respond to upsizing by increasing the length of the pillow, thus being able to keep the layer height of a gas adsorption portion low, and being capable of operating, keeping a pressure loss low. However, in the pillow-like shape, because of the necessity of keeping a pressure loss low, the adsorbent filling rate to volume (volume ratio) cannot be increased. Thus the apparatus has a disadvantage that its gas processing amount is less increased compared to the rate at which the apparatus is increased in size.

Heretofore, various proposals have been made to solve these problems. Patent Literature 1 proposes filling with an adsorbent annularly in a cylindrically-shaped gas separation apparatus. This apparatus increases gas dispersion plate area by making an adsorbent-filled structure in an annular shape, keeping a pressure loss small.

As a method capable of achieving a high gas processing amount, rapid pressure swing (RPSA) is proposed.

Patent Literature 2 shows a method of collecting hydrogen from a gas mixture by RPSA. In this method, an adsorption layer in an adsorption tower is divided, a gas mixture is introduced from one outer side of adsorption layers, an unnecessary gas component is adsorbed by an adsorption layer, a high-purity gas after removal of the unnecessary component is collected from an area between the adsorption layers while the high-purity gas is introduced into the other adsorption layer to desorb the unnecessary component adsorbed in the adsorption layer, and the unnecessary gas component is released from a region at the other outer side of the adsorbent to the outside of the system.

Likewise, Patent Literatures 3 and 4 show methods in which an adsorption layer is divided. In particular,

Patent Literature 3 describes a method intended to remove moisture and carbon dioxide for preprocessing or the like of pressure swing.

### Citation List

### Patent Literature

Patent Literature 1: Japanese Laid-open Patent Publication No. 1-164417
Patent Literature 2: Japanese Laid-open Patent Publication No. 4-267919
Patent Literature 3: Japanese Laid-open Patent Publication No. 1-159019
Patent Literature 4: Japanese Laid-open Patent Publication No. 2009-274024

### Summary

### Technical Problem

However, the apparatus described in Patent Literature 1, which has a structure in which partitions forming annular rings are formed by dispersion plates, has the following problems when produced as an actual machine. Specifically, since an adsorbent is generally granular with a particle size of about 2 to 3 mm, the dispersion plates need to have a structure formed with a large number of gas through holes that are openings of about 1 mm. However, it is very difficult for this apparatus to ensure the precision of the annular rings while retaining the strength of the dispersion plates by reinforcement. Further, it is considered that it is considerably difficult to align the centers of the two annular dispersion plates at the overall height in the height direction of the large gas adsorption separation apparatus. Moreover, even if these can be implemented, the apparatus becomes very expensive.

The method described in Patent Document 2 is effective at separating a gas hard to adsorb such as hydrogen, but is difficult to apply to a gas easy to adsorb such as carbon dioxide. Further, in this method, operation is performed only by a pressure difference between two adsorption layers, and thus cannot be applied to separation that requires a pressure difference of some tens to some hundreds of kPa such as carbon dioxide separation described above.

In the method described in Patent Literature 3, an adsorption layer is divided to reduce a pressure loss due to an adsorption layer and increase volumetric efficiency. However, it is a structure for removing impurities in a gas, and cannot collect an adsorbed gas such as carbon dioxide with high purity.

The method described in Patent Literature 4 has the features that units can be separated for transportation. However, the entire structure is quadrangular, and thus it is difficult to apply a pressure of some tens to some hundreds of kPa to the interior as in carbon dioxide separation described above.

The present invention is made in view of the above, and has an objective of providing a gas adsorption separation apparatus that solves the problems in the related art, can be applied to adsorption separation of carbon dioxide from a gas mixture without problems, can increase the adsorbent filling rate to volume even when the apparatus is increased in size, and can be obtained in a simple structure at a low cost.

### Solution to Problem

To solve the problem described above and achieve the object, a gas adsorption separation apparatus according to a first invention includes a plurality of adsorption vessels through which a gas mixture is passed to be brought into contact with an adsorbent to adsorb at least one gas component in the gas mixture, the plurality of adsorption vessels performing, by turns, an adsorption step and a desorption step, or an adsorption step, a rinsing step and a desorption step, wherein each adsorption vessel has a vertical cylindrical shape, the interior of each adsorption vessel is divided into five regions in parallel in a horizontal direction, and of these regions, a central region constitutes a gas inflow region, regions adjacent to the gas inflow region on opposite sides of the gas inflow region constitute gas adsorption regions, and outermost regions adjacent to the respective gas adsorption regions constitute off-gas outflow regions.

A gas adsorption separation apparatus according to a second invention includes a plurality of adsorption vessels through which a gas mixture is passed to be brought into contact with an adsorbent to adsorb at least one gas component in the gas mixture, the plurality of adsorption vessels performing, by turns, an adsorption step and a desorption step, or an adsorption step, a rinsing step and a desorption step, wherein each adsorption vessel has a pillow-like shape, the interior of each adsorption vessel is divided into five regions in parallel in a height direction, and of these regions, a central region constitutes a gas inflow region, upper and lower regions adjacent to the gas inflow region constitute gas adsorption regions, and outermost regions adjacent to the respective gas adsorption regions constitute off-gas outflow regions.

A gas adsorption separation apparatus according to a third invention includes a plurality of adsorption vessels through which a gas mixture is passed to be brought into contact with an adsorbent to adsorb at least one gas component in the gas mixture, the plurality of adsorption vessels performing, by turns, an adsorption step and a desorption step, or an adsorption step, a rinsing step and a desorption step, wherein each adsorption vessel has a pillow-like shape, the interior of each adsorption vessel is divided into five regions in parallel in a horizontal direction, and of these regions, a central region constitutes a gas inflow region, regions adjacent to the gas inflow region on opposite sides of the gas inflow region constitute gas adsorption regions, and outermost regions adjacent to the respective gas adsorption regions constitute off-gas outflow regions.

In the above-described invention, the gas adsorption separation apparatus according to the present invention, the adjacent regions are separated by a partition wall through which a gas can pass, and the gas inflow region and the off-gas outflow regions are spaces that let a gas into and out of the gas adsorption regions through the partition walls.

### Advantageous Effects of Invention

A gas adsorption separation apparatus according to the present invention can be applied to adsorption separation of carbon dioxide from a gas mixture without problems, and can increase the adsorbent filling rate to volume even when the apparatus is increased in size. Thus the apparatus can be made compact and improved in efficiency.

Further, since an adsorbent layer thickness is divided into two, the thickness of each adsorbent layer can be reduced, thus being able to reduce a pressure loss and shorten time necessary for adsorption and desorption. Moreover, the apparatus can be obtained in a simple structure at a low cost.

Furthermore, an adsorption vessel has a vertical cylindrical shape or a pillow-like shape in which the width of the adsorption apparatus decreases from a gas inflow region of a gas mixture to a gas outflow region. Thus, when the volume of a gas mixture is reduced by gas adsorption, the linear velocity of the gas mixture does not decrease. Accordingly, an advantageous effect that time necessary for adsorption can be further shortened can be obtained.

### Brief Description of Drawings

FIG. 1 is a perspective view schematically illustrating a gas adsorption separation apparatus according to an embodiment of the present invention.
FIG. 2 is a perspective view schematically illustrating one adsorption vessel constituting a part of the gas adsorption separation apparatus illustrated in FIG. 1.
FIG. 3 is a horizontal cross-sectional view of the gas adsorption separation apparatus illustrated in FIG. 2.
FIG. 4 is a side view schematically illustrating a gas adsorption separation apparatus according to another embodiment of the present invention.
FIG. 5 is a side view schematically illustrating one adsorption vessel constituting a part of the gas adsorption separation apparatus illustrated in FIG. 4.
FIG. 6 is a perspective view schematically illustrating a gas adsorption separation apparatus according to another embodiment of the present invention.
FIG. 7 is a perspective view schematically illustrating one adsorption vessel constituting a part of the gas adsorption separation apparatus illustrated in FIG. 6.
FIG. 8 is a horizontal cross-sectional view of the gas adsorption separation apparatus illustrated in FIG. 6.
FIG. 9A is a diagram illustrating a comparison in volume utilization rates and the like between an apparatus according to the present invention and an apparatus in the related art.
FIG. 9B is a diagram illustrating a comparison in volume utilization rates and the like between an apparatus according to the present invention and an apparatus in the related art.
FIG. 10A is a diagram schematically illustrating a conventional gas separation apparatus.
FIG. 10B is a diagram schematically illustrating a conventional gas separation apparatus.

### Description of Embodiments

Hereinafter, embodiments of the present invention will be described with reference to the drawings. In all the drawings of the embodiments, the same or corresponding portions are denoted by the same reference numerals. The present invention is not limited to the embodiments described below.

A gas adsorption separation apparatus in the embodiments includes a plurality of adsorption vessels, that is, adsorption towers, through which a gas mixture is passed to be brought into contact with an adsorbent to adsorb at least one gas component in the gas mixture. The gas adsorption separation apparatus makes the plurality of adsorption vessels perform an adsorption step and a desorption step, or an adsorption step, a rinsing step and a desorption step by turns.

### (First Embodiment)

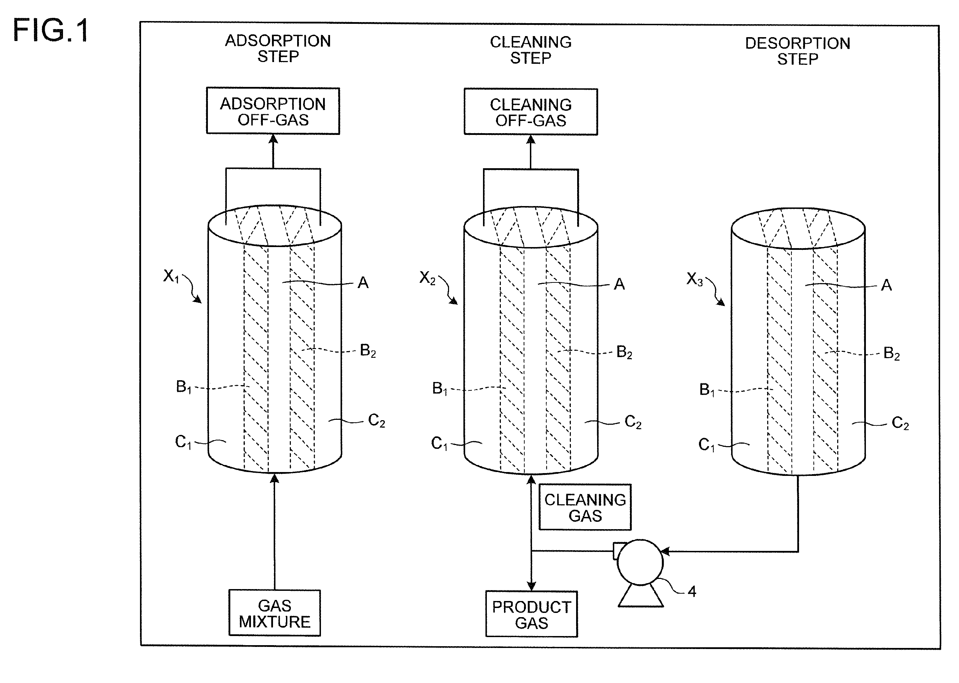

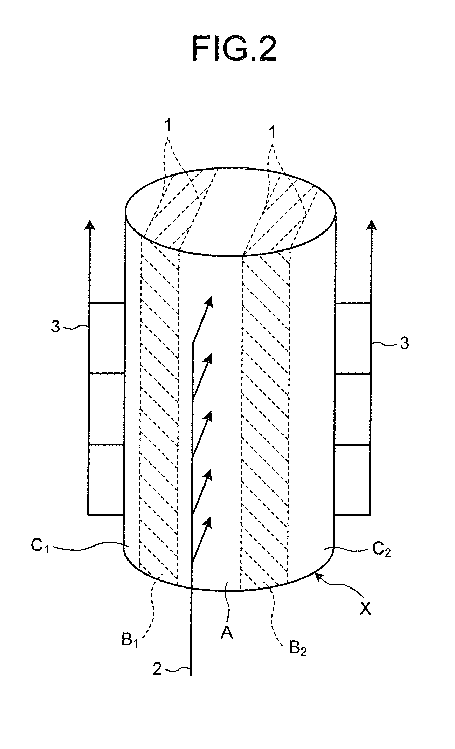

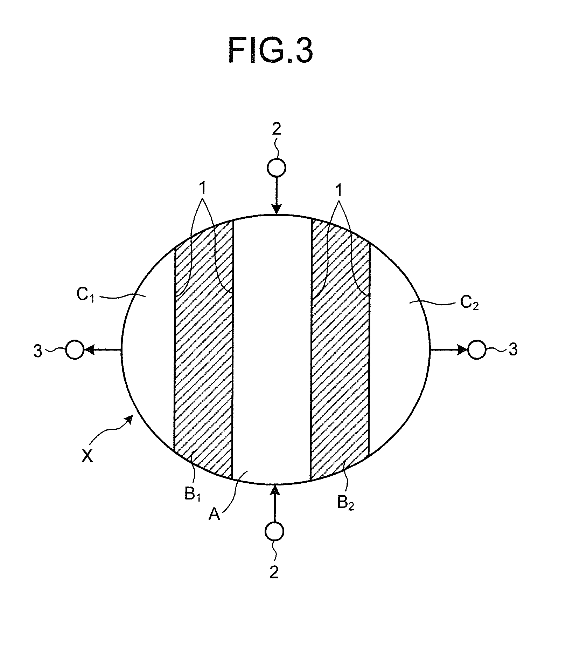

FIG. 1 is a perspective view schematically illustrating a gas adsorption separation apparatus according to a first embodiment of the first invention of the application. FIG. 2 is a perspective view schematically illustrating one adsorption vessel, that is, an adsorption tower constituting a part of the gas adsorption separation apparatus illustrated in FIG. 1. FIG. 3 is a horizontal cross-sectional view of an adsorption vessel illustrated in FIG. 1.

The gas adsorption separation apparatus according to the first embodiment includes three adsorption vessels x₁ to x₃, and makes the three adsorption vessels x₁ to x₃ perform an adsorption step, a rinsing step and a desorption step, respectively, in this order by turns. The gas adsorption separation apparatus may alternatively include two adsorption vessels, and make the two adsorption vessels perform an adsorption step and a desorption step alternately, that is, may omit a rinsing step.

Each adsorption vessel x has a vertical cylindrical shape, and the interior of each adsorption vessel x is divided into five regions in parallel in a horizontal direction. Of the five regions, a central region constitutes a gas inflow region A, regions adjacent to the gas inflow region A on opposite sides of the gas inflow region A constitute gas adsorption regions B₁ and B₂, and outermost regions adjacent to the respective gas adsorption regions B₁ and B₂ constitute off-gas outflow regions C₁ and C₂. The cross-sectional shape of the adsorption vessels x in a radial direction may be an ellipse.

Partition walls 1 formed by dispersion plates provided along a cylinder axis direction of each adsorption vessel x for separating the regions are formed of porous plates having small openings over the entire surfaces such as metal gauze, for example, which allow a gas to pass therethrough while holding a granular adsorbent in the gas adsorption regions B₁ and B₂. In the first embodiment, the partition walls 1 linearly divide the interior of each adsorption vessel x to form the regions.

The gas inflow region A and the off-gas outflow regions C₁ and C₂ are spaces that let a gas into and out of the gas adsorption regions B₁ and B₂ through the partition walls 1.

A gas supply pipe 2 for supplying a gas mixture is connected to the gas inflow region A. Gas discharge pipes 3 for discharging a concentrated gas that is a gas after a portion of a gas mixture is adsorbed and separated are connected to the off-gas outflow regions C₁ and C₂, individually. A location at which the gas supply pipe 2 supplies a gas mixture can be chosen as desired. For example, a gas mixture can be supplied from either of or both of at least one location at the side of the gas inflow region A, that is, at the side of the adsorption vessel x, and at least one location at the ends of the gas inflow region A, that is, at the top surface and the bottom surface of the adsorption vessel x. Further, in the gas inflow region A, a dispersion nozzle that allows a gas mixture to be supplied homogeneously throughout the region may be provided.

In the gas adsorption separation apparatus like this, in the adsorption vessel x₁ in the adsorption step, a gas mixture is introduced through the gas supply pipe 2 into the gas inflow region A. The gas mixture introduced into the gas inflow region A flows through the partition walls 1 formed by the dispersion plates into the gas adsorption regions B₁ and B₂, where a specific gas component in the gas mixture is adsorbed, depending on the characteristics of the adsorbent, and a non-adsorbed component is concentrated in the gas phase. The concentrated gas flows out through the partition walls 1 formed by the dispersion plates into the outermost off-gas outflow regions C₁ and C₂, and then is discharged through the gas discharge pipes 3.

In the adsorption vessel x₂ in the rinsing step, a portion of a high-purity adsorbed gas desorbed in the adsorption vessel x₃ in the desorption step is supplied to the gas inflow region A as a rinsing gas. The rinsing gas flows from the gas adsorption regions B₁ and B₂ through the partition walls 1 formed by the dispersion plates into the off-gas outflow regions C₁ and C₂, thus expelling an impurity gas within the gas adsorption regions B₁ and B₂ into the off-gas outflow regions C₁ and C₂ to rinse the gas adsorption regions B₁ and B₂. The rinsing off-gas flowing out into the off-gas outflow regions C₁ and C₂ is discharged through the gas discharge pipes 3.

In the adsorption vessel x₃ in the desorption step, the pressure in the vessel is reduced by a vacuum pump 4, an adsorbed gas is desorbed from an adsorbent, and a highly-purified gas is collected. As described above, a portion thereof is supplied as a rinsing gas to an adsorption vessel in the rinsing step.

Pressures in the adsorption step and the desorption step only need to be set such that a desorption pressure is lower than an adsorption pressure. Accordingly, for example, the adsorption pressure may be atmospheric pressure and the desorption pressure may be a vacuum, or the adsorption pressure may be provided by the application of pressure and the desorption pressure may be atmospheric pressure or a vacuum.

By performing the three steps in turn at regular time intervals in the three adsorption vessels x₁ to x₃ as above, a high-purity gas can be continuously produced from a gas mixture.

### (Second Embodiment)

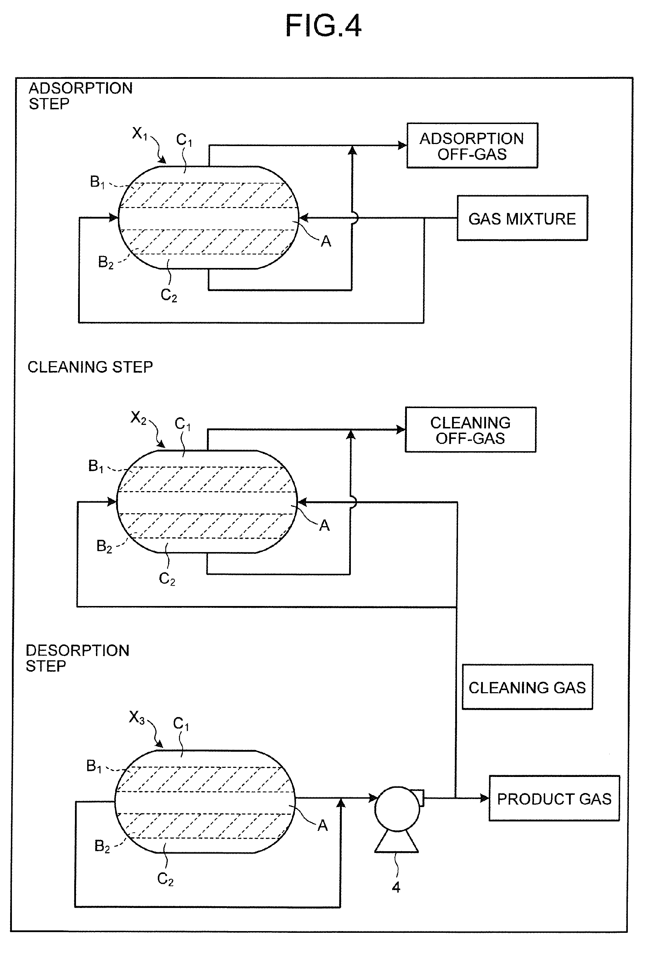

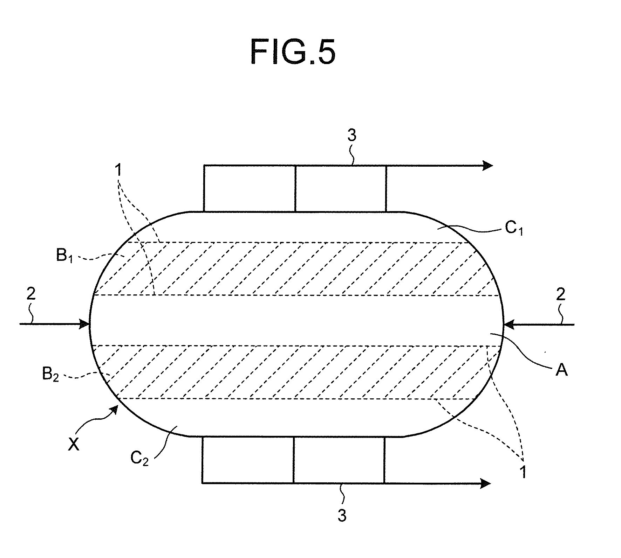

FIG. 4 is a side view schematically illustrating a gas adsorption separation apparatus according to a second embodiment of the second invention of the application. FIG. 5 is a side view schematically illustrating one adsorption vessel constituting a part of the gas adsorption separation apparatus illustrated in FIG. 4.

The gas adsorption separation apparatus according to the second embodiment also includes three adsorption vessels x₁ to x₃, and makes the three adsorption vessels x₁ to x₃ perform an adsorption step, a rinsing step and a desorption step in this order by turns. The gas adsorption separation apparatus may alternatively include two adsorption vessels, and make the two adsorption vessels perform an adsorption step and a desorption step alternately, that is, may omit a rinsing step.

Each adsorption vessel x has a pillow-like shape, and the interior of each adsorption vessel x is divided into five regions in parallel in a height direction, that is, a vertical direction. Of the five regions, a central region constitutes a gas inflow region A, upper and lower regions adjacent to the gas inflow region A constitute gas adsorption regions B₁ and B₂, and outermost regions adjacent to the respective gas adsorption regions B₁ and B₂ constitute off-gas outflow regions C₁ and C₂. Here, the pillow-shaped adsorption vessels x refer to adsorption vessels having a horizontal cylindrical shape spherically rounded at both ends of the cylinder. The cross-sectional shape of the adsorption vessels x in a radial direction may be an ellipse.

Partition walls 1 formed by dispersion plates provided in a horizontal direction within each adsorption vessel x for separating the regions are formed by porous plates having small openings over the entire surfaces such as metal gauze, for example, which allow a gas to pass therethrough while holding a granular adsorbent in the gas adsorption regions B₁ and B₂. In the second embodiment, the partition walls 1 linearly divide the interior of each adsorption vessel x to form the regions.

The gas inflow region A and the off-gas outflow regions C₁ and C₂ are spaces that let a gas into and out of the gas adsorption regions B₁ and B₂ through the partition walls 1.

A gas supply pipe 2 for supplying a gas mixture is connected to the gas inflow region A. Gas discharge pipes 3 for discharging a concentrated gas that is a gas after a portion of a gas mixture is adsorbed and separated are connected to the off-gas outflow regions C₁ and C₂, individually. A location at which the gas supply pipe 2 supplies a gas mixture can be chosen as desired. Further, in the gas inflow region A, a dispersion nozzle that allows a gas mixture to be supplied homogeneously throughout the region may be provided.

In the gas adsorption separation apparatus like this, in the adsorption vessel x₁ in the adsorption step, a gas mixture is introduced through the gas supply pipe 2 into the gas inflow region A. The gas mixture introduced into the gas inflow region A flows through the partition walls 1 formed by the dispersion plates into the upper and lower gas adsorption regions B₁ and B₂, where a specific gas component in the gas mixture is adsorbed, depending on the characteristics of the adsorbent, and a non-adsorbed component is concentrated in the gas phase. The concentrated gas flows out through the partition walls 1 formed by the dispersion plates into the outermost off-gas outflow regions C₁ and C₂ located above and below, and then is discharged through the gas discharge pipes 3.

In the adsorption vessel x₂ in the rinsing step, a portion of a high-purity adsorbed gas desorbed in the adsorption vessel x₃ in the desorption step is supplied to the gas inflow region A as a rinsing gas. The rinsing gas flows from the upper and lower gas adsorption regions B₁ and B₂ through the partition walls 1 formed by the dispersion plates into the off-gas outflow regions C₁ and C₂, thus expelling an impurity gas within the gas adsorption regions B₁ and B₂ into the off-gas outflow regions C₁ and C₂ to rinse the gas adsorption regions B₁ and B₂. The rinsing off-gas flowing out into the off-gas outflow regions C₁ and C₂ is discharged through the gas discharge pipes 3.

In the adsorption vessel x₃ in the desorption step, the pressure in the vessel is reduced by a vacuum pump 4, an adsorbed gas is desorbed from an adsorbent, and a highly-purified gas is collected. As described above, a portion thereof is supplied as a rinsing gas to an adsorption vessel in the rinsing step.

Pressures in the adsorption step and the desorption step only need to be set such that a desorption pressure is lower than an adsorption pressure. Accordingly, for example, the adsorption pressure may be atmospheric pressure and the desorption pressure may be a vacuum, or the adsorption pressure may be provided by the application of pressure and the desorption pressure may be atmospheric pressure or a vacuum.

By performing the three steps in turn at regular time intervals in the three adsorption vessels x₁ to x₃ as above, a high-purity gas can be continuously produced from a gas mixture.

### (Third Embodiment)

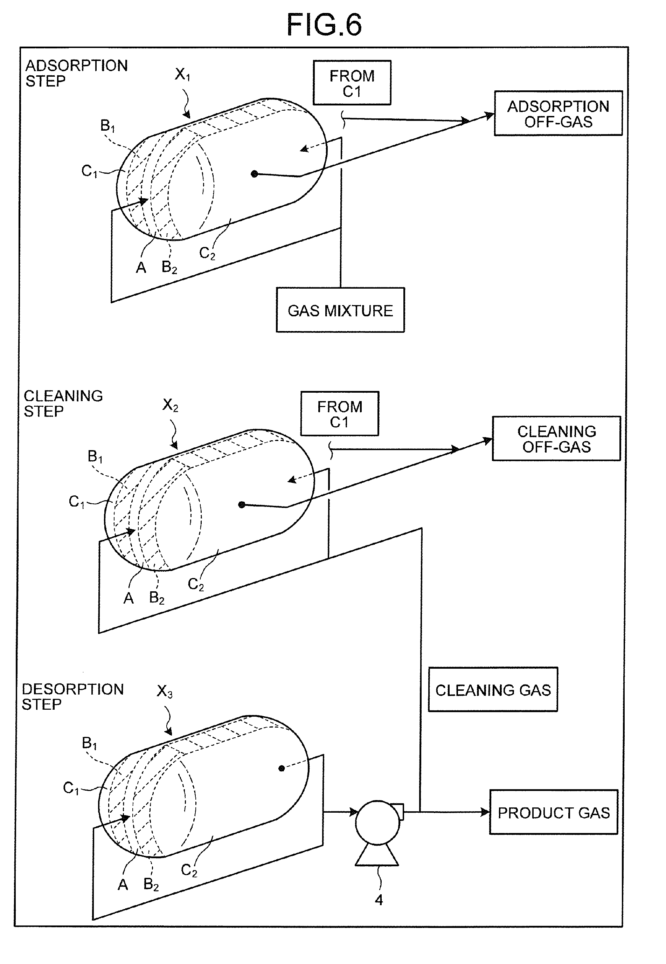

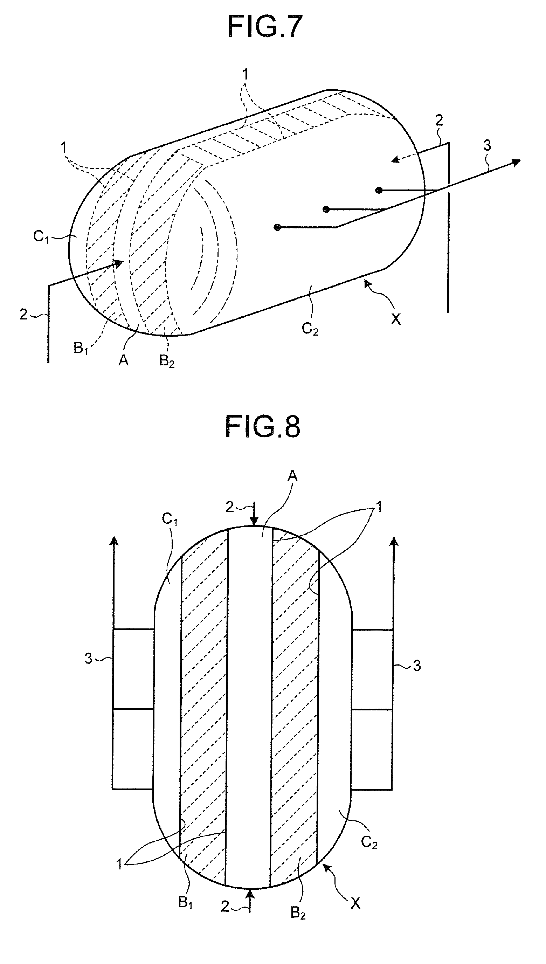

FIG. 6 is a perspective view schematically illustrating a gas adsorption separation apparatus according to a third embodiment of the third invention of the application. FIG. 7 is a perspective view schematically illustrating one adsorption vessel, that is, an adsorption tower, constituting a part of the gas adsorption separation apparatus illustrated in FIG. 6. FIG. 8 is a horizontal cross-sectional view of the adsorption vessel illustrated in FIG. 6.

The gas adsorption separation apparatus according to the third embodiment also includes three adsorption vessels x₁ to x₃, and makes the three adsorption vessels x₁ to x₃ perform an adsorption step, a rinsing step and a desorption step in this order by turns. The gas adsorption separation apparatus may alternatively include two adsorption vessels, and make the two adsorption vessels perform an adsorption step and a desorption step alternately, that is, may omit a rinsing step.

Each adsorption vessel x has a pillow-like shape, and the interior of each adsorption vessel x is divided into five regions in parallel in a horizontal direction. Of the five regions, a central region constitutes a gas inflow region A, regions adjacent to the gas inflow region A on opposite sides of the gas inflow region A constitute gas adsorption regions B₁ and B₂, and outermost regions adjacent to the respective gas adsorption regions B₁ and B₂ constitute off-gas outflow regions C₁ and C₂. As described above, the pillow-shaped adsorption vessels x refer to adsorption vessels having a horizontal cylindrical shape spherically rounded at both ends of the cylinder. The cross-sectional shape of the adsorption vessels x in a radial direction may be an ellipse.

Partition walls 1 formed by dispersion plates provided in a horizontal direction within each adsorption vessel x for separating the regions are formed by porous plates having small openings over the entire surfaces such as metal gauze, for example, which allow a gas to pass therethrough while holding a granular adsorbent in the gas adsorption regions B₁ and B₂. In the third embodiment, the partition walls 1 linearly divide the interior of each adsorption vessel x to form the respective regions.

The gas inflow region A and the off-gas outflow regions C₁ and C₂ are spaces that let a gas into and out of the gas adsorption regions B₁ and B₂ through the partition walls 1.

A gas supply pipe 2 for supplying a gas mixture is connected to the gas inflow region A. Gas discharge pipes 3 for discharging a concentrated gas that is a gas after a portion of a gas mixture is adsorbed and separated are connected to the off-gas outflow regions C₁ and C₂, individually. A location at which the gas supply pipe 2 supplies a gas mixture can be chosen as desired. Further, in the gas inflow region A, a dispersion nozzle that allows a gas mixture to be supplied homogeneously throughout the region may be provided.

In the gas adsorption separation apparatus like this, in the adsorption vessel x₁ in the adsorption step, a gas mixture is introduced through the gas supply pipe 2 into the gas inflow region A. The gas mixture introduced into the gas inflow region A flows through the partition walls 1 formed by the dispersion plates into the gas adsorption regions B₁ and B₂ on the opposite sides, where a specific gas component in the gas mixture is adsorbed, depending on the characteristics of the adsorbent, and a non-adsorbed component is concentrated in the gas phase. The concentrated gas flows out through the partition walls 1 formed by the dispersion plates into the outermost off-gas outflow regions C₁ and C₂ located on the right and left, and then is discharged through the gas discharge pipes 3.

In the adsorption vessel x₂ in the rinsing step, a portion of a high-purity adsorbed gas desorbed in the adsorption vessel x₃ in the desorption step is supplied to the gas inflow region A as a rinsing gas. The rinsing gas flows from the gas adsorption regions B₁ and B₂ on the opposite sides through the partition walls 1 formed by the dispersion plates into the off-gas outflow regions C₁ and C₂, thus expelling an impurity gas within the gas adsorption regions B₁ and B₂ into the off-gas outflow regions C₁ and C₂ to rinse the gas adsorption regions B₁ and B₂. The rinsing off-gas flowing out into the off-gas outflow regions C₁ and C₂ is discharged through the gas discharge pipes 3.

In the adsorption vessel x₃ in the desorption step, the pressure in the vessel is reduced by a vacuum pump 4, an adsorbed gas is desorbed from an adsorbent, and a highly-purified gas is collected. As described above, a portion thereof is supplied as a rinsing gas to an adsorption vessel in the rinsing step.

Pressures in the adsorption step and the desorption step only need to be set such that a desorption pressure is lower than an adsorption pressure. Accordingly, for example, the adsorption pressure may be atmospheric pressure and the desorption pressure may be a vacuum, or the adsorption pressure may be provided by the application of pressure and the desorption pressure may be atmospheric pressure or a vacuum.

By performing the three steps in turn at regular time intervals in the three adsorption vessels x₁ to x₃ as above, a high-purity gas can be continuously produced from a gas mixture.

The apparatuses in the embodiments of the present invention do not limit the type of adsorbent filling the gas adsorption regions B₁ and B₂. Depending on the type of gas adsorbed, any adsorbent such as zeolites, activated carbon, and alumina can be used. Further, the apparatuses in the embodiments can be applied to any type of gas mixture and can adsorb and separate any type of gas component.

Moreover, the apparatuses in the embodiments can also be applied to temperature swing adsorption that is a method of adsorbing while cooling and heating during regeneration, and to pressure-temperature swing adsorption that combines temperature swing adsorption and pressure swing adsorption. In this case, a structure for inserting heat exchange tubes for heating and cooling into the gas adsorption regions B₁ and B₂, or the like, can be adopted.

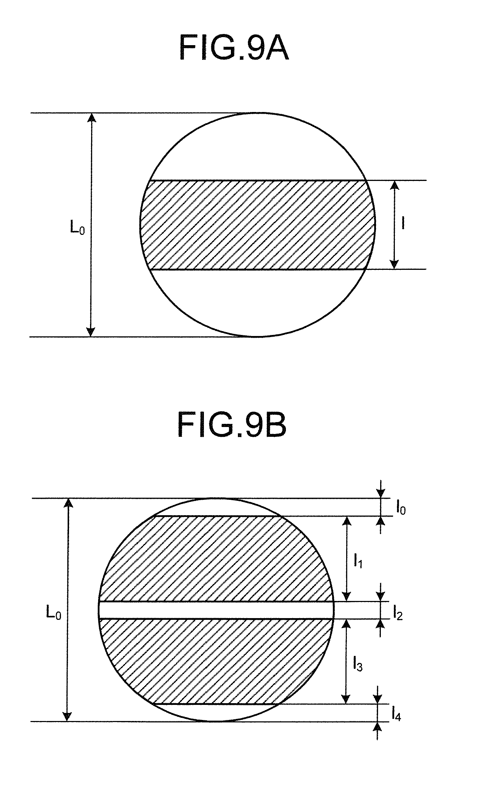

The gas adsorption separation apparatuses in the embodiments can increase the adsorbent filling rate to volume, and thus the apparatuses can be made compact and improved in efficiency. FIGS. 9A and 9B are vertical cross-sectional views in a radial direction of a pillow-shaped adsorption vessel. For example, as illustrated in FIG. 9A, in a conventional apparatus in which a single adsorbent layer with a layer thickness 1 of 2.5 m is provided in a pillow-shaped adsorption vessel with a diameter L₀ of 6.5 m, the length of the adsorption layer is 45 m and the volume utilization rate is only 48%. By contrast, as illustrated in FIG. 9B, in the apparatuses in the embodiments in which two adsorbent layers with a layer thickness l₁ and l₃ of 2.5 m, for example, are provided, being separated by a space as the gas inflow region A with an width l₂ of 0.5 m, for example, the length of the adsorption layers is 26 m, and the volume utilization rate increases to 83%. The off-gas outflow regions C₁ and C₂ also have a width l₀ and l₄ of 0.5 m, for example. As a result, when the conventional pillow-shaped gas adsorption separation apparatus needs a length of 50 m, the pillow-shaped adsorption apparatuses in the embodiments only needs a length of about 29 m, for filling with the same amount of adsorbents. Further, it is verified that in various gas adsorption separation apparatuses, the adsorbent filling rate to volume can be increased, and the apparatuses can be made compact and improved in efficiency.

Further, when activated carbon, an X-type zeolite, or the like is used as an adsorbent, the embodiments can be applied to adsorption and separation of carbon dioxide from a gas mixture. Moreover, in the embodiments, since an adsorbent layer thickness is divided into two, each adsorbent layer can be reduced in thickness. This results in advantages that a pressure loss can be reduced, and time necessary for adsorption and desorption can be shortened. Furthermore, since an adsorption vessel has a vertical cylindrical shape or a pillow-like shape, and the width of the adsorption apparatus decreases from the gas inflow region A of a gas mixture to the off-gas outflow regions C₁ and C₂, even when the volume of the gas mixture is reduced by gas adsorption, the linear velocity of the gas mixture does not decrease. This provides an advantageous effect that time necessary for adsorption can be further shortened.

Although the embodiments of the present invention have been described in detail above, the present invention is not limited to the above embodiments, and various modifications based on the technical ideas of the present invention are possible. For example, numerical values mentioned in the above embodiments are only examples, and numerical values different from those may be used as necessary.

### Reference Signs List

- 1: partition wall
- 2: gas supply pipe
- 3: gas discharge pipe
- 4: vacuum pump
- A: gas inflow region
- B₁, B₂: gas adsorption regions
- C₁, C₂: off-gas outflow regions

## Claims

1. A gas adsorption separation apparatus comprising a plurality of adsorption vessels through which a gas mixture is passed to be brought into contact with an adsorbent to adsorb at least one gas component in the gas mixture, the plurality of adsorption vessels performing, by turns, an adsorption step and a desorption step, or an adsorption step, a rinsing step and a desorption step, wherein
each adsorption vessel has a vertical cylindrical shape, the interior of each adsorption vessel is divided into five regions in parallel in a horizontal direction, and of these regions, a central region constitutes a gas inflow region, regions adjacent to the gas inflow region on opposite sides of the gas inflow region constitute gas adsorption regions, and outermost regions adjacent to the respective gas adsorption regions constitute off-gas outflow regions.

2. A gas adsorption separation apparatus comprising a plurality of adsorption vessels through which a gas mixture is passed to be brought into contact with an adsorbent to adsorb at least one gas component in the gas mixture, the plurality of adsorption vessels performing, by turns, an adsorption step and a desorption step, or an adsorption step, a rinsing step and a desorption step, wherein
each adsorption vessel has a pillow-like shape, the interior of each adsorption vessel is divided into five regions in parallel in a height direction, and of these regions, a central region constitutes a gas inflow region, upper and lower regions adjacent to the gas inflow region constitute gas adsorption regions, and outermost regions adjacent to the respective gas adsorption regions constitute off-gas outflow regions.

3. A gas adsorption separation apparatus comprising a plurality of adsorption vessels through which a gas mixture is passed to be brought into contact with an adsorbent to adsorb at least one gas component in the gas mixture, the plurality of adsorption vessels performing, by turns, an adsorption step and a desorption step, or an adsorption step, a rinsing step and a desorption step, wherein
each adsorption vessel has a pillow-like shape, the interior of each adsorption vessel is divided into five regions in parallel in a horizontal direction, and of these regions, a central region constitutes a gas inflow region, regions adjacent to the gas inflow region on opposite sides of the gas inflow region constitute gas adsorption regions, and outermost regions adjacent to the respective gas adsorption regions constitute off-gas outflow regions.

4. The gas adsorption separation apparatus according to any one of claims 1 to 3, wherein
the adjacent regions are separated by a partition wall through which a gas can pass, and
the gas inflow region and the off-gas outflow regions are spaces that let a gas into and out of the gas adsorption regions through the partition walls.
